# EUROPEAN PATENT APPLICATION

(11) **EP 1 752 867 A1**
(43) Date of publication of application: **14.02.2007**
(21) Application number: 05254569.6
(22) Date of filing: 21.07.2005
(51) Int. Cl.: G06F 3/048

(54) **Method of zooming in a display image for a portable electrical device**

(71) Applicant: Tatung Co., Ltd., Taipei City 104, R.O.C. (TW)
(72) Inventor: Chan, Chieh-Yu, Jhongshan District Tapei City 104 Taiwan (CN); Chen, Szu-Hua, Jhongshan District Tapei City 104 Taiwan (CN); Wang, Yueh-Chi, Jhongshan District Tapei City 104 Taiwan (CN); Chen, Yi-Ru, Jhongshan District Tapei City 104 Taiwan (CN)
(74) Representative: Tranter, Andrew David

(57) **Abstract**

The present invention relates to one method of zooming in a displayed image to be used in a portable electronic device. The method comprises: displaying an original image; determining whether or not to switch to a zooming in mode; selecting a zooming in ratio; in accordance with the zooming in ratio, processing the zoom in of the original image to produce a zoomed in image; and displaying the zoomed in image corresponding to the size of the display screen, and in accordance with one control signal to change the zoomed in image displayed by the display screen.

## Description

### BACKGROUND OF THE INVENTION

### 1. Field of the Invention

The present invention relates to one method of zooming in a displayed image and, more particularly to be used in a portable electronic device.

### 2. Description of Related Art

PDA is a kind of portable electronic device that can meet the need of users in memorandum, document processing, and playing multi-media files. However, due to the restriction of the size of PDA screen, when PDA reads digital files such as TXT file, digital picture files such as JPG or BMP files, or digital image files such as MPEG or AVI files, it usually occurs that the displaying condition is not excellent and results in difficulty in reading. In some cases, the file is not even distinguishable which seriously affects the convenience of portable electronic devices.

To overcome the disadvantage listed above, it is desired to disclose one method of zooming in the displayed image so that the readability of the small-sized screen can be enhanced without changing the size of the display screen, via utilizing the keystrokes of portable electronic device to accomplish the functions of zooming in and shifting.

### SUMMARY OF THE INVENTION

To avoid the disadvantage of unreadability caused by small screen size, the present invention discloses one method of zooming in displayed image to be used in a portable electronic device, comprising: (A) displaying one original image; (B) determining whether or not to switch to a zooming in mode; (C) selecting one zooming in ratio; (D) in accordance with the zooming in ratio, processing a zoom in of the original image to produce a zoomed in image; and (E) displaying the zoomed in image corresponding to the size of display screen, and in accordance with one control signal to change the zoomed in image displayed by the display.

Most image pictures exceed the scopes of the display screen of portable electronic devices; thus, applying the method mentioned above, it is very easy to enhance the readability of small-sized screen via switching one general mode to a zooming in mode and in accordance with a control signal, changing the zoomed in image displayed by the display screen.

The portable electronic device can be PDA, intelligent cellular phones, mobile phones, or notebooks. Original image can be digital photos, digital motion images, and digital files. Moreover, the control signal of the method of zooming in screen image is provided by the keystrokes of portable electronic device.

Other objects, advantages, and novel features of the invention will become more apparent from the following detailed description when taken in conjunction with the accompanying drawings.

### BRIEF DESCRIPTION OF THE DRAWINGS

Figure 1 shows a portable electronic device in accordance with a preferred embodiment of the present invention.
Figure 2 is the flow chart of the method of zooming in a display screen in accordance with a first preferred embodiment of the present invention.
Figure 3 shows a portable electronic device in accordance with a preferred embodiment of the present invention.
Figure 4 is the flow chart of the method of zooming in a display screen in accordance with a second preferred embodiment of the present invention.

### DETAILED DESCRIPTION OF THE PREFERRED EMBODIMENT

### First preferred embodiment:

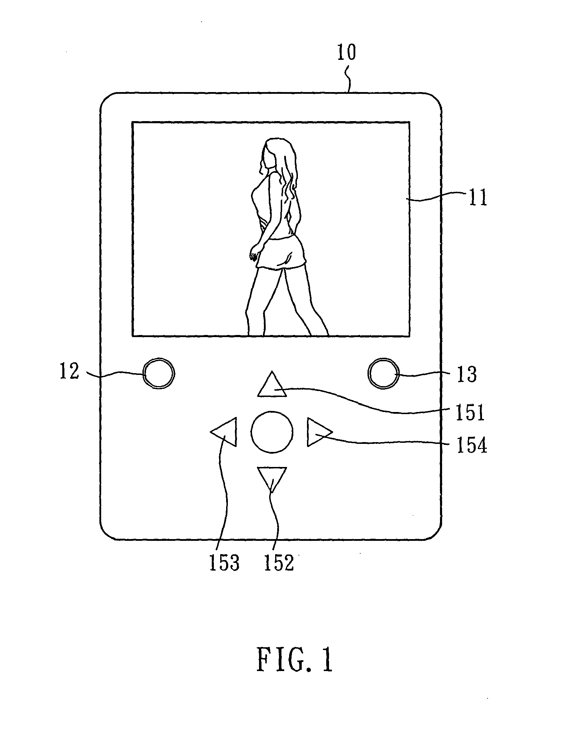

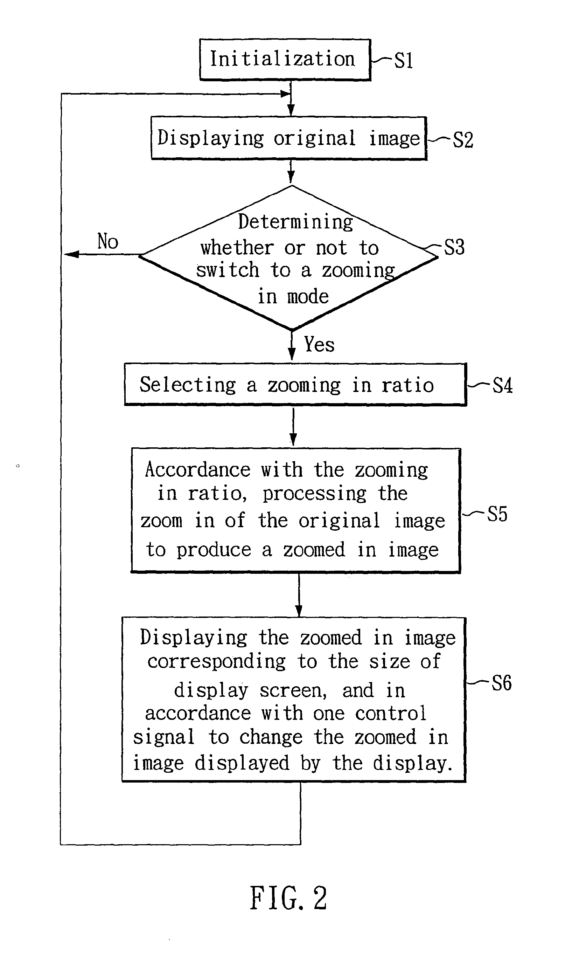

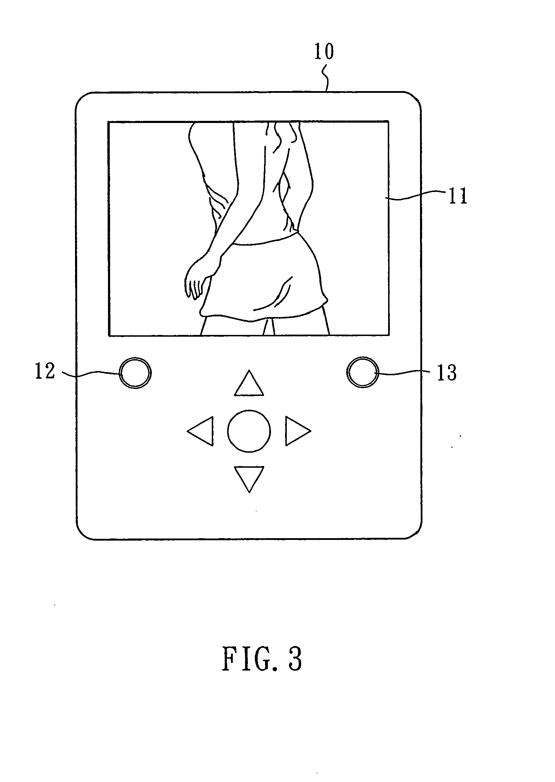

As shown in Figure 1 and Figure 2, the method of zooming in a displayed image of the present invention is to be used in a portable electronic device, comprising the following steps:
Step S1: Initialization.
Step S2: Displaying original image. This original image can be displayed by a monitor 11 of the portable electronic device 10. As shown in Figure 1, assuming that the image display capacity of the monitor 11 of the general portable electronic device 10 is 220 pixels* 176 pixels, the original image is about the size of 220 pixels*176 pixels; thus it can be displayed by the monitor 11. Original image can be electronic pictures in any image format such as GIF, JPG, BMP, or other similar electronic pictures. Furthermore, original image can also be electronic file in any file format such as TXT, DOC, or similarly electronic files. Obviously, original image can also be electronic image of any motion image format such as MPEG 1, MPEG 2, AVI, or similar electronic images. In this preferred embodiment, electronic pictures are used for illustrative purpose only.
Step S3: Determining whether or not to switch to a zooming in mode. When the user presses the function key 13, the display screen of portable electronic device 10 will pop up a function menu, including options such as Zoom in and Exit. The user, in accordance with his/her desired function, selects the function of Zoom in or Exit via the up arrow key 141 or down arrow key 142. For example, if the user selects "Zoom in", the return key/right arrow key 144 should be pressed to carry in Step S4. If, however, the user selects "Exit", and presses the return key/left arrow key 143, it means that zoom in of image is not desired and will get back to Step S2 to display the original image.
Step S4: Selecting a zooming in ratio. When the user selects for the zooming in ratio, the display screen of the portable electronic device 10 will pop up another function menu wherein the options correspond to different zooming in ratio such as 1 time (220 pixels* 176 pixels), 1.5 times (330 pixels*264 pixels), 2 times (440 pixels*352 pixels), and 2.5 times (550 pixels*440 pixels). Above listed zooming ratios are given for illustrative purpose only.
Step S5: In accordance with the zooming in ratio, processing the zoom in of the original image to produce a zoomed in image. Referring to Figure 3, assuming that the user selects the zooming in ratio to be 2.5 times and presses the select/confirm key 13, the monitor 11 in Figure 3 will process zooming in of the original image and obtain a zoomed in image with a size of 550 pixels * 440 pixels. Obviously, the user may select different zooming in ratio according to his/her actual need. Moreover, the method of zooming in the image can be the known one such as the interpolation method, and thus a detailed description is deemed unnecessary.
Step S6: Displaying the zoomed in image corresponding to the size of display screen, and in accordance with one control signal to change the zoomed in image displayed by the display screen. The size of the zoomed in image is greater than the display capacity of the monitor 11, so the display screen of monitor 11 only displays partial image of the zoomed in image, which preferably is the central image of the zoomed in image, but also can be the upper left corner image of the zoomed in image. Afterwards, the user can change the zoomed in image in the display screen via pressing up arrow key 141, down arrow key 142, return key/left arrow key 143, or confirm key/right arrow key 144. When the user presses up arrow key 141, down arrow key 142, return key/left arrow key 143, or confirm key/right arrow key 144, the portable electronic device 10 receives its corresponding control signal, and in accordance with the control signal changes the zoomed in image in the display screen. Referring to Figure 3, after completing the above processes, the user may clearly view the zoomed in image.

### Second preferred embodiment:

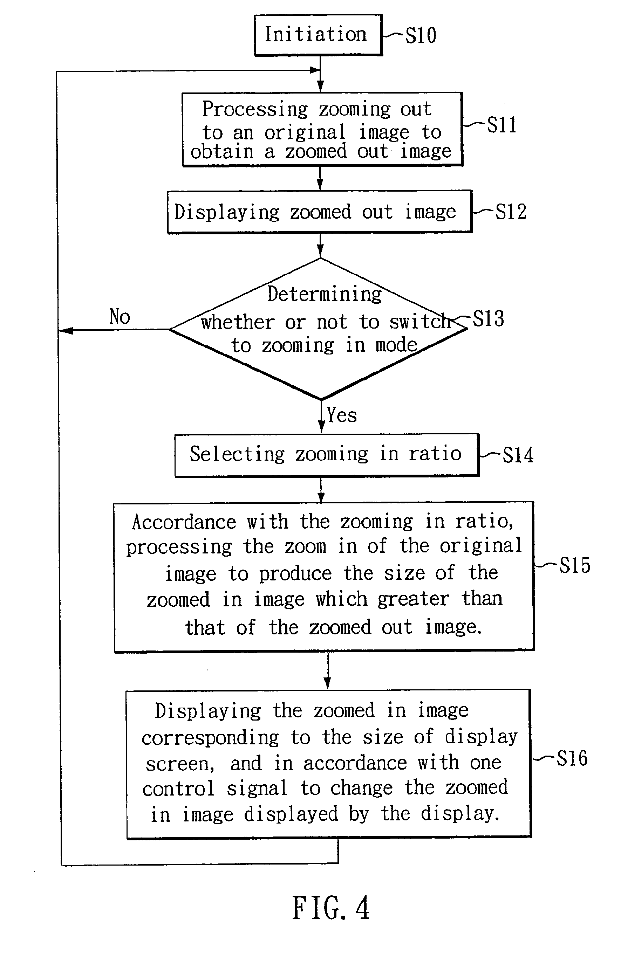

Please refer to Figure 4, the flow chart of the method of zooming in display screen in accordance with the second preferred embodiment of the present invention. The size of the original image may also be greater than the display capacity of the monitor 11; thus, before displaying the original image, the portable electronic device 10 processes zooming out of the image to obtain a zoomed out image wherein the size of the zoomed out image meets the display capacity of the monitor 11 and can be therefore displayed by the monitor 11. Due to the similarity between the first and second preferred embodiments of the present invention, only the difference between the two is illustrated. The method of zooming in display image comprising the following steps:
Step S 10: Initiation.
Step S 11: Processing zooming out to an original image to obtain a zoomed out image. In this preferred embodiment, the size of the original image is greater than the display capacity of the monitor 11; thus, in order to display this original image (640 pixels * 480 pixels) in the monitor 11 (220 pixels * 176 pixels), it is required to process zooming out of the original image.
Step S12: Displaying zoomed out image. The initial image (e.g. 640 pixels * 480 pixels) is zoomed out to 220 pixels * 176 pixels via Step S 11 to be displayed in the monitor 11.
Step S 13: Determining whether or not to switch to the zooming in mode. Since the original image is relatively larger than that of the monitor 11, as the original image is zoomed out to fit the size of the monitor 11 (200 pixels * 176 pixels), the image will be too small to be read. Therefore, it is required to repeat the process of Step S3 in the first preferred embodiment.
Step S 14: Selecting a zooming in ratio. This is the same as the process of Stop S4 in the first preferred embodiment. That is, the display screen of the portable electronic device 10 will pop up another function menu wherein the options correspond to different zooming in ratios.
Stop S 15: In accordance with the zooming in ratio, processing the zoom in of the original image to produce a zoomed in image wherein the size of the zoomed in image is greater than that of the zoomed out image. When the user selects to use a zooming in ratio of 2.5 times, due to the original image (e.g. 640 pixels * 480 pixels) displayed in the monitor 11 (220 pixels * 176 pixels) is a zoomed out image of the original image, even the zoomed out image of the monitor 11 is zoomed in accordance with a zooming in ratio of 2.5 times (550 pixels * 440 pixels), the displayed image is still smaller than the original image (640 pixels * 480 pixels). Therefore, the process here is just an image processing, not zooming in the original image. Only comparing to the zoomed out image of the monitor 11, the displayed image is referring as a zoomed in image.
Step S16: Displaying the zoomed in image corresponding to the size of display screen, and in accordance with one control signal to change the zoomed in image displayed by the display screen. This step is the same as the process of Step S6 in the first preferred embodiment.

In the above illustrated first and second preferred embodiments, the original image is a digital picture. It is rather easy to apply the same process when the initial image is a digital motion image or a digital file; and thus they are not further explained.

Although the present invention has been explained in relation to its preferred embodiment, it is to be understood that many other possible modifications and variations can be made without departing from the spirit and scope of the invention as hereinafter claimed.

## Claims

1. A method of zooming in a display screen to be used in a portable electronic device, comprising the steps of:
(A) displaying an original image;
(B) determining whether or not to switch to a zooming in mode;
(C) selecting a zooming in ratio;
(D) in accordance with the zooming in ratio; processing a zoom in of the original image to produce a zoomed in image; and
(E) displaying a zoomed in image corresponding to the size of display screen, and in accordance with one control signal to change the zoomed in image displayed by the display screen.

2. The method of claim 1, wherein the initial image is one digital picture.

3. The method of claim 1, wherein the original image is a digital motion image.

4. The method of claim 1, wherein the original image is a digital file.

5. The method of claim 1, wherein the portable electronic device is a multimedia player.

6. The method of claim 1, wherein the portable electronic device is a MP3 player.

7. The method of claim 1, wherein the portable electronic device is a PDA.

8. The method of claim 1, wherein the control signal is provided by one keystroke of the portable electronic device.

9. A method of zooming in a display screen to be used in a portable electronic device, comprising the steps of:
(A) processing a zooming out to an original image to obtain a zoomed out image;
(B) displaying the zoomed out image;
(C) determining whether or not to switch to a zooming in mode;
(D) selecting a zooming in ratio;
(E) in accordance with the zooming in ratio, processing a zoom in of the original image to produce a zoomed in image; and
(F) displaying the zoomed in image corresponding to the size of display screen, and in accordance with one control signal to change the zoomed in image displayed by the display screen;
wherein the size of the zoomed in image is greater than that of the zoomed out image.

10. The method of claim 9, wherein the original image is a digital picture.

11. The method of claim 9, wherein the original image is a digital motion image.

12. The method of claim 9, wherein the original image is a digital file.

13. The method of claim 9, wherein the portable electronic device is a multimedia player.

14. The method of claim 9, wherein the portable electronic device is a MP3 player.

15. The method of claim 9, wherein the portable electronic device is a PDA.

16. The method of claim 9, wherein the control signal is provided by one keystroke of the portable electronic device.
